# FASCICULE DE BREVET EUROPEEN

(11) **EP 0 982 577 B1**
(45) Date de publication et mention de la délivrance du brevet: **23.04.2008**
(21) Numéro de dépôt: 99402120.2
(22) Date de dépôt: 25.08.1999
(51) Int. Cl.: G01M 11/00

(54) **Appareil de mesure de paradiaphotie linéique des fibres multicoeurs**
Gerät zur Messung der Übersprechdämpfung zwischen optischen Fasern
Device for measuring crosstalk between multicore optical fibres

(30) Priorité: 27.08.1998 FR 9810768
(43) Date de publication de la demande: 01.03.2000
(73) Titulaire: Fahrenheit Thermoscope LLC, Las Vegas, NV 89119 (US)
(72) Inventeur: Boscher, Daniel, 22560 Trebeurden (FR); Bizeul, Jean-Claude, 22700 Louannec (FR); Leve, Alain, 22700 Perros Guirec (FR)
(74) Mandataire: Texier, Christian

(56) Documents cités:
- EP-A- 0 605 301
- US-A- 4 309 105

## Description

La présente invention concerne le domaine des fibres optiques multicoeurs.

Plus précisément encore la présente invention a pour but de proposer des moyens aptes à permettre une mesure de couplage optique entre coeurs d'une fibre multicoeurs.

Le concept de fibres multicoeurs est apparu en 1978, pour des applications fibres multimodes. Il a été repris ensuite aux environ de 1986 pour des applications monomodes.

Et dans ce genre d'applications il apparaît souhaitable de pouvoir mesurer avec précision la puissance couplée et la variation de puissance couplée, entre les coeurs, en fonction de la longueur de la fibre.

Une telle mesure serait fondamentale pour les spécifications des systèmes de transmission basés sur ces fibres multicoeurs. Il est en effet primordial de veiller à maintenir dans toute installation, les limites supérieures du signal parasite du aux couplages entre coeurs, en deça d'un seuil admissible.

Cependant à la connaissance des inventeurs, jusqu'ici aucun système performant et fiable n'a encore été proposé à cet effet.

Le document US-A-4,309,105 divulgue un système de mesure de couplage optique entre fibres d'un câble comprenant plusieurs fibres. Le document EP-A1-0,605,301 présente un réflectomètre optique dans le domaine temporel destiné à analyser les défauts d'une fibre optique à partir du signal rétrodiffusé par celle-ci. Ces documents ne concernent pas le domaine des fibres optiques multicoeurs.

Il est généralement admis que la diaphotie est fonction décroissante de la distance intercoeurs h et fonction croissante du diamètre de mode 2wo, elle est également fonction croissante de la longueur de fibre lorsque le ratio h/2wo>>1 et que la théorie des modes couplés ne peut pas alors s'appliquer. Jusqu'ici on a pas su réaliser des analyses et mesures précises sur une fibre multicoeurs.

Un autre but important de la présente invention est de proposer des moyens qui permettent une mesure fiable sans exiger de coupure de la fibre testée.

Les buts précités sont atteints dans le cadre de la présente invention, grâce à un système comprenant des moyens émetteurs aptes à émettre un train d'impulsions de largeur et de fréquence contrôlées, dans une extrémité d'un coeur d'une fibre multicoeurs, et des moyens de détection aptes à détecter le signal reçu sur la même extrémité d'au moins un autre coeur adjacent de la fibre multicoeurs, avec une fenêtre temporelle contrôlée proche de la durée d'impulsion d'émission et avec un retard compris entre 0 et la période d'émission.

Selon une autre caractéristique avantageuse de la présente invention, les moyens de traitement comprennent des moyens aptes à rajouter au signal obtenu sur les moyens de détection, un signal représentatif de la puissance perdue par atténuation le long du coeur placé en regard des moyens de détection, afin d'obtenir la diaphotie.

Selon encore une autre caractéristique avantageuse de la présente invention, les moyens de traitement comprennent en outre des moyens aptes à rajouter au signal de diaphotie, un signal représentatif de la puissance perdue par atténuation le long du coeur placé en regard des moyens émetteurs, afin d'obtenir la tétédiaphotie.

D'autres caractéristiques, buts et avantages de la présente invention apparaîtront à la lecture de la description détaillée qui va suivre et en regard des dessins annexés, donnés à titre d'exemple non limitatif, et sur lesquels
- la figure 1 représente schématiquement la structure générale d'un système conforme à la présente invention,
- la figure 2 représente une courbe de rétrodiffusion obtenue à l'aide d'un système conforme à la présente invention,
- la figure 3 représente la variation de la diaphotie et de la télédiaphotie obtenue sur une fibre multicoeurs, à l'aide de l'appareil conforme à la présente invention et
- la figure 4 représente schématiquement le processus de traitement mis en oeuvre dans le cadre de la présente invention.

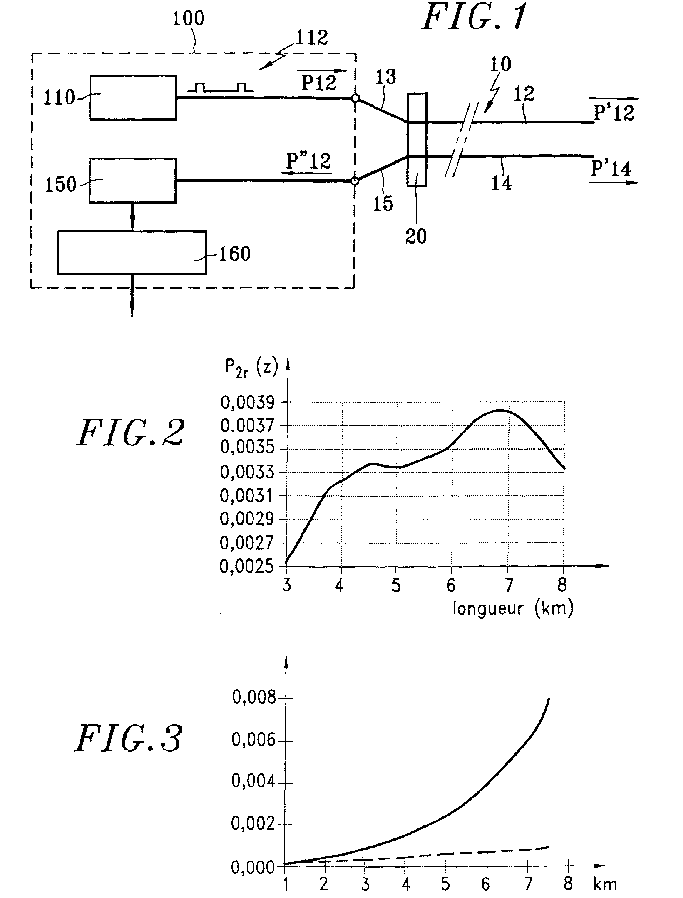

On a représenté schématiquement sur la figure 1 annexée l'architecture générale d'un système 100 conforme à la présente invention.

On aperçoit sur cette figure 1 deux coeurs 12, 14 d'une fibre multicoeurs 10. Sur une extrémité, ces deux coeurs 12 et 14 sont isolés et séparés par un éclateur 20.

Le système 100 conforme à la présente invention comprend des moyens émetteurs 110, par exemple à base d'un laser, aptes à émettre un train d'impulsions 112 de largeur et de fréquence contrôlées, dans l'extrémité 13 du coeur 12 accessible au niveau de l'éclateur, et des moyens de détection 150 aptes à détecter le signal reçu sur la même extrémité 15 du coeur adjacent 14 (voire éventuellement de plusieurs coeurs adjacents) de la fibre multicoeurs. Ces moyens récepteurs 150 sont par ailleurs associés à des moyens de traitement et d'analyse 160 définissant une fenêtre temporelle contrôlée de réception proche de la durée d'impulsion d'émission et avec un retard compris entre 0 et la période d'émission, pour permettre une analyse de la diaphotie, et de la télédiaphotie.

La période d'émission Te des impulsions par l'émetteur 110 doit être supérieure au temps nécessaire pour que ces impulsions parcourent un aller et retour dans la fibre, soit Te supérieure à 2Dn/C si l'on appelle D la longueur de la fibre, n l'indice du coeur et C la vitesse de propagation de la lumière dans le vide.

Ce système permet de connaître la puissance couplée à chaque endroit de la fibre et donc d'accéder au coefficient de transfert linéique instantané tout au long de la fibre. Il permet ainsi de déceler des variations de distance intercoeurs, des variations de diamètre de mode et des couplages localisés, pouvant être causés par exemple par des courbures accidentelles.

En effet la mesure de la puissance reçue sur les moyens 160 à un instant t = 2to après l'émission d'une impulsion, permet de déterminer la puissance couplée entre les coeurs 12 et 14 à une distance de l'origine de la fibre égale à la distance parcourue par la lumière pendant le temps to, soit à la distance Cto/n.

On a illustré sur la figure 2 un exemple de courbe de rétrodiffusion obtenue sur une fibre multicoeurs, à l'aide d'un système de mesure conforme à la présente invention. Cette figure 2 représente la puissance mesurée sur les moyens de réception 150.

L'analyse de cette courbe permet d'accéder à la variation de couplage le long de la fibre.

On observera que la courbe ainsi obtenue se distingue fondamentalement des courbes obtenues dans le cadre d'une mesure de rétrodiffusion classique sur une fibre monomode en injectant des impulsions laser dans une extrémité d'une telle fibre monomode et en détectant le flux rétrodiffusé à la sortie de cette fibre, grâce à un coupleùr.

En effet ces courbes de rétrodiffusion classiques sur fibre monomode qui correspondent à des mesures d'atténuation banales, ont l'allure d'une pente descendante encadrée par deux pics.

Par contre les courbes de rétrodiffusion obtenues dans le cadre de la présente invention se présentent sous forme générale d'une « cloche » comme on le voit sur la figure 2.

En première approximation, si l'on admet notamment que le coefficient de rétrodiffusion est constant le long de la fibre, on peut considérer que cette courbe répond à l'équation P₂ᵣ(z) = ae^{-(α1+α2)z}[(e ^{(α1-α2)z} - 1)/(α1-α2)] soit:
P₂ᵣ(z) = aze^{-2αz} si l'on considère que tous les coeurs mis en jeu ont les mêmes caractéristiques d'atténuation α(z), ce qui doit être vérifié notamment lorsque lesdits coeurs mis en jeu proviennent de la même préforme.

Ces équations sont élaborées sur la base de l'analyse du chemin suivi par la lumière. Dans un premier temps, une impulsion est injectée à l'entrée d'un premier coeur 12. Elle se propage ensuite le long de ce coeur 12 à la vitesse v = C/n. Elle va donc subir une atténuation dans le premier coeur 12 lors de sa propagation. Le long de la fibre on a également un couplage du premier coeur 12 vers le second coeur 14. Puis la lumière couplée dans le deuxième coeur 14 est rétrodiffusée vers l'entrée du deuxième coeur 14, et subit ainsi une atténuation dans le deuxième coeur 14 lors de sa propagation.

Dans les formules précitées on appelle :
P₁(z) et P₂(z) les puissances le long des deux coeurs 12 et 14 respectivement,
α1(z) et α2 (z) les coefficients d'atténuation dans les coeurs 12 et 14 respectivement, et
P₂ᵣ la puissance mesurée par l'appareil de rétrodiffusion sur les moyens 150.

La diaphotie correspond au rapport des puissances respectivement obtenue à la sortie du coeur 14 et injectée à l'entrée du coeur 12 (soit 10log P'14/P12, en référence aux valeurs P'14 et P12 mentionnées schématiquement sur la figure 1).

La télédiaphotie correspond au rapport des puissances obtenues respectivement à la sortie du coeur 14 et à la sortie du coeur 12 (soit 10log P'14/P'12, en référence aux valeurs P'14 et P'12 mentionnées schématiquement sur la figure 1).

La paradiaphotie correspond au rapport des puissances respectivement injectée à l'entrée du coeur 12 et obtenue en rétrodiffusion à l'entrée du coeur 14 (soit 10log P12/P"14, en référence aux valeurs P12 et P"14 mentionnées schématiquement sur la figure 1).

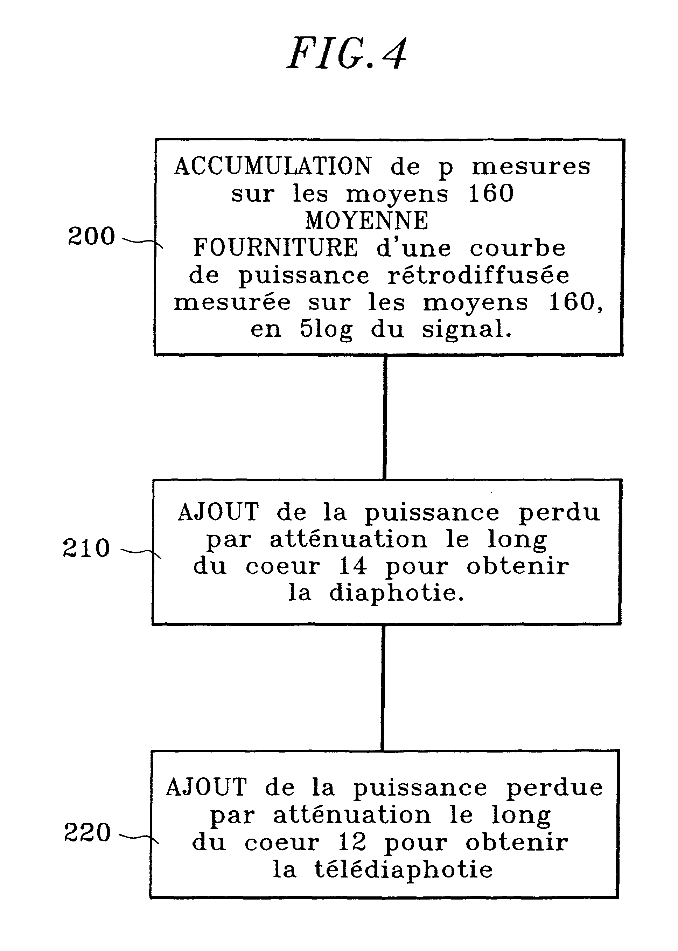

On a schématisé le processus de traitement conforme à la présente invention sur la figure 4 annexée.

Comme on le voit à l'étape référencée 200 sur la figure 4, dans un premier temps, les moyens 160 accumulent les courbes de réponse détectées sur les moyens 150 suite aux émissions successives d'impulsions par le générateur 110, opèrent une moyenne de ces courbes et délivrent ainsi une courbe de puissance rétrodiffusée mesurée sur les moyens 150, du type illustré sur la figure 2. Pour cela les moyens 160 retiennent de préférence une valeur en 5log du signal reçu sur les moyens 150 (5log pour tenir compte du trajet aller et retour de la lumière et non pas le 10log comme cela est classique dans l'électronique d'acquisition des appareils de mesure d'atténuation). Ce signal représente en dB la puissance rétrodiffusée, en fonction de la longueur de la fibre, puisque l'instant de détection d'une puissance instantanée détermine directement la distance correspondante de couplage sur la fibre.

Pour obtenir la diaphotie, les moyens de traitement 160 rajoutent au signal précité, un signal représentatif de la puissance perdue par atténuation le long du coeur 14 placé en regard des moyens de détection 150, comme schématisé à l'étape 210 sur la figure 4.

Il suffit pour cela d'introduire dans l'appareil une valeur représentative de l'atténuation α dans le coeur. Cette valeur peut être connue et/ou mesurée par tout moyen approprié.

Et pour obtenir la tétédiaphotie, les moyens de traitement 160 rajoutent en outre au signal de diaphotie, un signal représentatif de la puissance perdue par atténuation le long du coeur 12 placé en regard des moyens émetteurs 110, comme schématisé à l'étape 220 sur la figure 4.

On a ainsi illustré sur la figure 3 un exemple de courbes de diaphotie (en pointillés) et de télédiaphotie obtenue le long d'une fibre multicoeurs, à l'aide d'un système conforme à la présente invention. Sur ces courbes, l'échelle des ordonnées correspond à un pourcentage de la puissance injectée.

Sur ces courbes on observe une variation générale linéaire de la puissance. Par ailleurs sur de grandes distances de fibres multicoeurs mises bout à bout (typiquement supérieures à environ 18 km) on observe des changements de pente caractéristiques de variations de la distance intercoeur h d'une fibre à l'autre et des changements de niveau, caractéristiques d'un changement de diamètre de mode.

Bien entendu la présente invention n'est pas limitée au mode de réalisation particulier qui vient d'être décrit, mais s'étend à toutes variantes conformes à son esprit.

La présente invention s'applique notamment aux fibres à 4 coeurs. Cependant elle n'est pas limitée à cette application spécifique et peut s'appliquer d'une façon générale à tout type de fibre multicoeurs, par exemple à des fibres à 7 coeurs.

## Revendications

1. Système de mesure du couplage optique entre coeurs (12, 14) d'une fibre multicoeurs (10), **caractérisé par le fait qu'**il comprend des moyens émetteurs (110) aptes à émettre un train d'impulsions (112) de largeur et de fréquence contrôlées, dans une extrémité d'un coeur (12) d'une fibre multicoeurs, et des moyens de détection (150) aptes à détecter le signal reçu sur la même extrémité d'au moins un autre coeur (14) adjacent de la fibre multicoeurs (10), avec une fenêtre temporelle contrôlée proche de la durée d'impulsion d'émission et avec un retard compris entre 0 et la période d'émission.

2. Système selon la revendication 1, **caractérisé par le fait qu'**il comprend des moyens de traitement (160) associés aux moyens de détection (150) et qui comprennent des moyens aptes à rajouter au signal obtenu sur les moyens de détection (150), un signal représentatif de la puissance perdue par atténuation le long du coeur (14) placé en regard des moyens de détection (150), afin d'obtenir la diaphotie.

3. Système selon l'une des revendications 1 ou 2, **caractérisé par le fait qu'**il comprend des moyens de traitement (160) associés aux moyens de détection (150) et qui comprennent en outre des moyens aptes à rajouter au signal de diaphotie, un signal représentatif de la puissance perdue par atténuation le long du coeur (12) placé en regard des moyens émetteurs (110), afin d'obtenir la tétédiaphotie.

4. Système selon l'une des revendications 1 à 3, **caractérisé par le fait qu'**il comprend un éclateur (20) apte à séparer les extrémités (13, 15) des deux coeurs (12, 14) placées respectivement en regard des moyens émetteurs (110) et des moyens de détection (150).

5. Système selon l'une des revendications 1 à 4, **caractérisé par le fait que** la période d'émission (Te) des impulsions par les moyens émetteurs (110) est supérieure au temps nécessaire pour que ces impulsions parcourent un aller et retour dans la fibre (10).

6. Système selon l'une des revendications 1 à 5, **caractérisé par le fait qu'**il comprend des moyens (160) aptes à accumuler les courbes de réponse détectées sur les moyens de détection (150) suite aux émissions successives d'impulsions par les moyens émetteurs(110), opérer une moyenne de ces courbes et délivrer sur cette base une courbe de puissance rétrodiffusée.

7. Système selon l'une des revendications 1 à 6, **caractérisé par le fait qu'**il comprend des moyens (160) aptes à calculer une valeur en 5log du signal reçu sur les moyens de détection (150).

## Claims

1. System for measuring the optical coupling between cores (12, 14) of a multicore fibre (10), **characterized in that** it comprises transmitter means (110) capable of transmitting a train of pulses (112) of controlled frequency and width into one end of a core (12) of a multicore fibre, and detection means (150) capable of detecting the signal received at the same end of at least one other adjacent core (14) of the multicore fibre (10), with a controlled time window close to the transmission pulse duration and with a delay between 0 and the transmission period.

2. System according to Claim 1, **characterized in that** it comprises processing means (160) which are associated with the detection means (150) and which comprise means capable of adding, to the signal obtained at the detection means (150), a signal representative of the power lost by attenuation along the core (14) placed in line with the detection means (150), in order to obtain the crosstalk.

3. System according to either of Claims 1 and 2, **characterized in that** it comprises processing means (160) which are associated with the detection means (150) and which also comprise means capable of adding, to the crosstalk signal, a signal representative of the power lost by attenuation along the core (12) placed in line with the transmitter means (110), in order to obtain the far-end crosstalk.

4. System according to one of Claims 1 to 3, **characterized in that** it comprises a spreader (20) capable of separating the ends (13, 15) of the two cores (12, 14) which are respectively placed in line with the transmitter means (110) and the detection means (150).

5. System according to one of Claims 1 to 4, **characterized in that** the period (Te) over which the pulses are transmitted by the transmitter means (110) is longer than the time needed for these pulses to make a round trip in the fibre (10).

6. System according to one of Claims 1 to 5, **characterized in that** it comprises means (160) capable of storing the response curves detected at the detection means (150) following the successive pulse transmissions by the transmitter means (110), taking an average of these curves and, on the basis of this, supplying a backscattered power curve.

7. System according to one of Claims 1 to 6, **characterized in that** it comprises means (160) capable of calculating a 5log value of the signal received at the detection means (150).

## Patentansprüche

1. System zur Messung der optischen Kopplung zwischen Kernen (12, 14) einer Mehrkernfaser (10), **dadurch gekennzeichnet, dass** es folgendes umfasst: Sendermittel (110), die dafür geeignet sind, eine Impulsfolge (112) mit kontrollierter Breite und Frequenz in ein Ende eines Kerns (12) einer Mehrkernfaser zu emittieren, und Detektionsmittel (150), die dafür geeignet sind, das am selben Ende wenigstens eines benachbarten weiteren Kerns (14) der Mehrkernfaser (10) empfangene Signal zu detektieren, und dies mit einem kontrollierten zeitlichen Fenster, das nahe an der emittierten impulsdauer liegt und mit einer Verzögerung, die zwischen 0 und der Emissionsperiode liegt.

2. System nach Anspruch 1, **dadurch gekennzeichnet, dass** es Verarbeitungsmittel (160) umfasst, die mit den Detektionsmitteln (150) verbunden sind und die Mittel umfassen, die dafür geeignet sind, dem Signal, das an den Detektionsmitteln (150) erhalten wird, ein Signal hinzuzufügen, das der Leistung entspricht, die durch Dämpfung entlang des Kerns (14), der vor den Detektionsmitteln (150) angeordnet ist, verloren geht, um das Übersprechen zu erhalten.

3. System nach einem der Ansprüche 1 oder 2, **dadurch gekennzeichnet, dass** es Verarbeitungsmittel (160) umfasst, die mit den Detektionsmitteln (150) verbunden sind und die außerdem Mittel umfassen, die dafür geeignet sind, dem Übersprechsignal ein Signal hinzuzufügen, das der Leistung entspricht, die durch Dämpfung entlang des Kerns (12), der vor den Sendermitteln (110) angeordnet ist, verloren geht, um das Teleübersprechen zu erhalten.

4. System nach einem der Ansprüche 1 bis 3, **dadurch gekennzeichnet, dass** es einen Abstandshalter (20) umfasst, der dafür geeignet ist, die Enden (13, 15) der beiden Kerne (12, 14), die vor den Sendenmitteln (110) bzw. den Detektionsmitteln (150) angeordnet sind, zu trennen.

5. System nach einem der Ansprüche 1 bis 4, **dadurch gekennzeichnet, dass** die Periode (Te) der Emission der Impulse durch die Sendermittel (110) größer ist, als die Zeit, die notwendig ist, damit diese Impulse einen Hin- und Rückweg in der Faser (10) durchlaufen.

6. System nach einem der Ansprüche 1 bis 5, **dadurch gekennzeichnet, dass** es Mittel (160) umfasst, die dafür geeignet sind, die Antwortkurven zu sammeln, die in den Detektionsmitteln (150) im Anschluss an die aufeinander folgenden Emissionen der Impulse durch die Sendermittel (110) detektiert werden, einen Mittelwert dieser Kurven zu bilden und auf dieser Basis eine Kurve der rückgestreuten Leistung bereitzustellen,

7. System nach einem der Ansprüche 1 bis 6, **dadurch gekennzeichnet, dass** es Mittel (160) umfasst, die dafür geeignet sind, einen 5log-Wert des von den Detektionsmitteln (150) empfangenen Signals zu berechnen.
